(19) Europäisches Patentamt

European Patent Office

Office européen des brevets

(11) **EP 0 931 680 B1**

## (12) EUROPÄISCHE PATENTSCHRIFT

(45) Veröffentlichungstag und Bekanntmachung des Hinweises auf die Patenterteilung:
**07.04.2004 Patentblatt 2004/15**

(51) Int Cl.⁷: **B60G 17/04**

(21) Anmeldenummer: **98123715.9**

(22) Anmeldetag: **12.12.1998**

(54) **Verfahren und Vorrichtung zur Überwachung der Funktion eines Kompressors**

Procedure and device for monitoring the functioning of a compressor

Procédé et dispositif de surveillance du fonctionnement d'un compresseur

(84) Benannte Vertragsstaaten:
**DE FR GB IT**

(30) Priorität: **17.01.1998 DE 19801665**

(43) Veröffentlichungstag der Anmeldung:
**28.07.1999 Patentblatt 1999/30**

(73) Patentinhaber: **DaimlerChrysler AG**
**70567 Stuttgart (DE)**

(72) Erfinder:
• **Kutscher, Eberhard**
**72135 Dettenhausen (DE)**
• **Lang, Joachim**
**71120 Grafenau (DE)**

• **Lohrmann, Gerhard**
**71679 Asperg (DE)**
• **Schneider, Reiner**
**78655 Dunningen (DE)**
• **Walter, Udo**
**73312 Geislingen (DE)**

(56) Entgegenhaltungen:
DD-A- 219 535         JP-A- 63 163 134
US-A- 4 691 521       US-A- 5 501 512
US-A- 5 585 553

• **PATENT ABSTRACTS OF JAPAN vol. 013, no. 122 (M-807), 27. März 1989 (1989-03-27) & JP 63 295859 A (DAIHATSU DIESEL KK), 2. Dezember 1988 (1988-12-02)**

**Beschreibung**

Die Erfindung betrifft ein Verfahren und eine Vorrichtung zur Überwachung der Funktion eines Kompressors, insbesondere eines Kompressors zur pneumatischen Niveauregulierung des Aufbaus eines Kraftfahrzeugs, nach dem Oberbegriff des Anspruches 1 bzw. 8.

Aus der DD 219 535 A1 ist es bekannt, den Druck im Arbeitsraum eines Verdichters zu überwachen und mit einem vorgegebenen Soll-Druck zu vergleichen, wobei eine Abweichung des Ist-Drucks vom Soll-Druck zu einem Fehlersignal führt. Der Ist-Druck wird über ein Meßglied erfaßt und in einer Vergleichseinrichtung mit dem abgespeicherten Sollwert verglichen, der vorab in einem Abnahmeversuch ermittelt wurde. Aus dem zeitlichen Verlauf des Ist-Drucks können unter Verknüpfung mit weiteren Betriebsgrößen Aussagen über Funktionsstörungen des Systems getroffen werden. Beispielsweise lassen sich aus der Änderung des Speicherdrucks in Verbindung mit Informationen über die Temperatur Funktionsfehler der Bauteile der Vorrichtung lokalisieren.

Der Sollwert liegt nur als statischer Druckwert, nicht aber als ein über die Zeit veränderlicher Kurvenverlauf vor. Eine zuverlässige Aussage über Funktionsstörungen kann daher nur bei einem stationären Betrieb der Vorrichtung getroffen werden, wenn der Druck im Speicherraum des Verdichters um ein bestimmtes Maß von dem Soll-Druck abweicht. Dynamische Schwankungen, die nicht aus Funktionsstörungen, sondern auf systembedingte Vorgänge, beispielsweise Anfahren oder Abschalten, zurückzuführen sind, können von der Vergleichseinrichtung mißinterpretiert werden und zu einer Falschmeldung führen.

Um dies auszuschließen, muß das System praktisch kontinuierlich überwacht werden und zum Ausgleich der Schwankungen ein Mittelwert des Ist-Drucks über längere Betriebsphasen gebildet werden, der dann mit dem eingestellten Sollwert verglichen wird. Dies erhöht wiederum den erforderlichen Speicher- und Rechenaufwand in der Vergleichseinrichtung.

Weitere Systeminformationen sind nur verwertbar, falls zuvor in der Vergleichseinrichtung entsprechende, auf die jeweiligen Systeminformationen angepaßte Vergleichskriterien formuliert und abgespeichert wurden. Dies erhöht aber den Aufwand für die Bereitstellung die Speicherung und die Berechnung der Daten. Um konkrete Rückschlüsse auf den Ort oder die Art eines aufgetretenen Fehlers zielen zu können, muß ein hoher Aufwand getrieben werden, andernfalls ist eine verläßliche Aussage über Funktionsstörungen nicht möglich.

Der Erfindung liegt das Problem zugrunde, mit geringem Aufwand eine zuverlässige Überwachung eines Kompressors zu schaffen.

Dieses Problem wird erfindungsgemäß bei einem Verfahren mit den Merkmalen des Anspruches 1 und bei einer Vorrichtung mit den Merkmalen des Anspruches 8 gelöst.

Der von dem Kompressor aufzuladende Speicherraum speist vorteilhaft pneumatische Funktionsglieder, insbesondere den Luftbalg einer Luftfeder in einem Kraftfahrzeug. Um zuverlässige Informationen über den Zustand des Kompressors zu erhalten, ist es gemäß dem Verfahren ausreichend, einen Vergleich von Ist- und Sollwerten nur während der Speicherladevorgänge des Speicherraums vorzunehmen, die ohnehin regelmäßig durchgeführt werden müssen. Es ist dagegen nicht erforderlich, kontinuierlich den Betriebszustand des Kompressors und des Speicherraums während des regulären Betriebs zu erfassen, wodurch die auszuwertende Datenmenge erheblich reduziert wird. Außerdem spielen betriebsbedingte Schwankungen während des regulären Betriebs keine Rolle und es ist daher nicht notwendige, statistische Ausgleichsrechnungen durchzuführen, um Schwankungen des Ist-Drucks durch Mittelung über längere Perioden zu glätten.

Der Verlauf des Soll-Drucks liegt zeitabhängig für den gesamten Speicherladevorgang vor, so daß während des Aufladens kontinuierlich oder quasi-kontinuierlich der gemessene Ist-Druck mit dem Soll-Druck verglichen werden kann. Die Soll-Druckkurve beinhaltet auch die Information über die zeitliche Änderung des Speicherdrucks, so daß ein Fehlersignal erzeugt wird, sobald ein vom momentanen Sollwert abweichender Druckanstieg vorliegt.

Zweckmäßig wird um die Druck-Sollkurve ein Toleranzband gelegt, innerhalb dessen kein Fehlersignal erzeugt wird. Aus der Abweichung des Ist-Drucks oberhalb oder unterhalb des Toleranzbandes kann auf die Art des Fehler geschlossen werden. Liegt der Ist-Druck während des Aufladens unterhalb des Toleranzbandes, kann also der vorgegebene Druck nicht erreicht werden, so liegt eine Undichtigkeit im Speicherraum, den zu- und abführenden Leitungen, in einem Ventil oder ein Defekt im Kompressor vor. Liegt der Ist-Druck während des Aufladens oberhalb des Toleranzbandes, so deutet dies auf eine verstopfte Leitung oder auf ein sich nicht öffnendes Ventil hin.

Nach der erfindungsgemäßen Vorrichtung wird der Ist-Druck des Speicherraums über einen Drucksensor aufgenommen und als Eingangssignal einem Steuergerät zugeführt, in dem das Eingangssignal mit einem Sollsignal verglichen wird, das den Solldruck repräsentiert. Dies erfolgt zeitgleich mit dem Aufladen des Speicherraums durch den Kompressor. Demzufolge sind der Speicherladevorgang und die Messung einschließlich der Auswertung über die Hardware aneinander gekoppelt, so daß regelmäßige Überprüfungen vorgenommen werden können und dennoch die Anzahl auszuwertender Daten sich in Grenzen hält.

Der Druckanstieg im Speicherraum verläuft nichtlinear, mit ansteigendem Speicherdruck wird der Druckverlauf immer flacher. Der Verlauf des Solldrucks kann in Abhängigkeit der Zeit als Polynom zweiten Grades ausgedrückt werden, wobei die drei Koeffizienten des Polynoms vorteilhaft einmalig anhand einer Referenzeinrichtung, bestehend aus einem Referenzkompressor mit zugehörigem Speicherraum, durch die Messung von drei Druck/Zeit-Meßpaaren während eines einmaligen Speicherladevorgangs bestimmt und im Steuergerät abgelegt werden. Dieses den Verlauf des Solldrucks beschreibende Polynom kann als Referenz für bauartgleiche Kompressoren verwendet werden.

Aufgrund des nichtlinearen Anstieges des Druckverlaufs ist darauf zu achten, daß während des Speicherladevorgangs nur gleiche Abschnitte des Soll- und des Ist-Drucks verglichen werden. Da der Druckabfall im Speicherraum auf einen unteren Druckwert von der jeweiligen Entnahme abhängt, ist der untere Druckwert als Anfangsdruck für den Soll/Ist-Vergleich zu berücksichtigen, indem zweckmäßig der Soll-Druck als Funktion des Anfangsdrucks und des Differenzdrucks ausgedrückt werden. Der Differenzdruck des Soll-Druckverlaufs kann durch Umformungen aus dem Polynom zweiten Grades in Abhängigkeit des Anfangsdrucks und der Zeitdifferenz, die zwischen der Messung des Anfangsdrucks und der Messung des aktuellen Ist-Drucks verstrichen ist, ausgedrückt werden. Durch diese Umformung wird aus dem gesamten Soll-Druckverlauf, ausgehend von einem bei jedem neuen Vorgang wechselnden Anfangsdruck, nur der interessierende Abschnitt herausgegriffen und mit den entsprechenden Istwerten verglichen.

Weitere Vorteile und zweckmäßige Ausführungsformen sind den weiteren Ansprüchen, der Figurenbeschreibung und den Zeichnungen zu entnehmen. Es zeigen:

Fig. 1    ein Pneumatikschaltbild zur Niveauregulierung des Aufbaus eines Kraftfahrzeugs,
Fig. 2    ein Diagramm mit gemessenem und berechnetem Druckverlauf,
Fig. 3    ein Diagramm mit einem Soll-Druckanstieg und überlagertem Toleranzband.

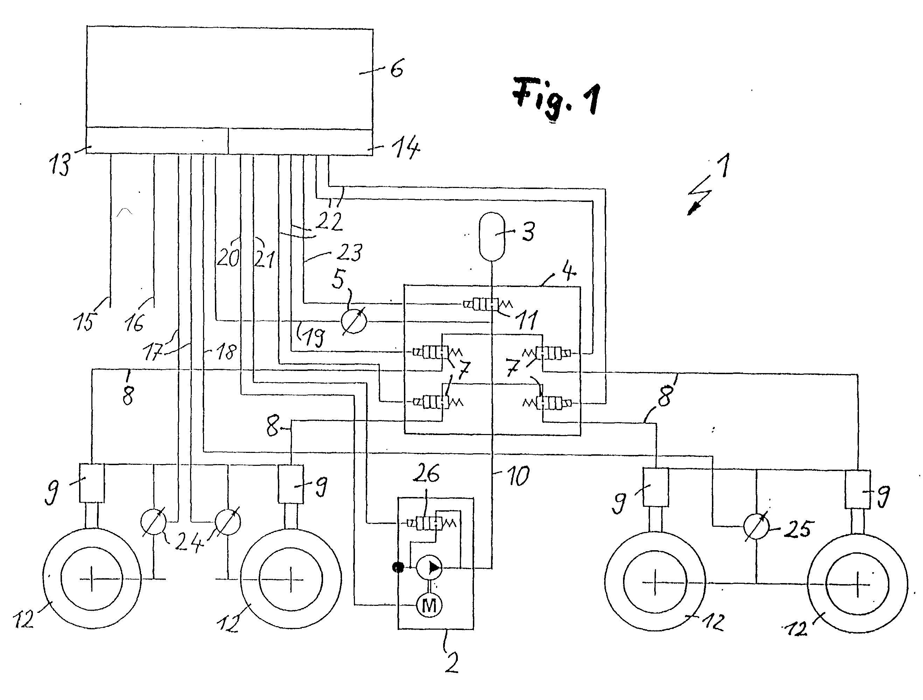

Die in Fig. 1 dargestellte Vorrichtung 1 umfaßt einen Kompressor 2, dem ein als Zentralspeicher ausgelegter, separater gasgefüllter Speicherraum 3 mit einem Ventilblock 4 zugeordnet ist. Der Kompressor 2 ist über eine Hauptleitung 10 mit dem Speicherraum 3 verbunden und beaufschlagt den Speicherraum 3 mit einem vorgegebenen Arbeitsdruck. Der Speicherraum 3 ist über Druckleitungen 8 mit Funktionselementen 9 verbunden, die mit dem im Speicherraum 3 herrschenden Arbeitsdruck beaufschlagt werden. Die Funktionselemente 9 sind im gezeigten Ausführungsbeispiel Luftfedern mit einem zugehörigem Luftbalg, die zwischen dem Aufbau und den Rädern 12 eines Kraftfahrzeugs angeordnet sind. Die Funktionselemente 9 sind sowohl an den Rädern der Vorderachse als auch an den Rädern der Hinterachse angeordnet.

Die Funktionselemente 9 dienen der Federung und der Niveauregulierung des Aufbaus des Kraftfahrzeugs, indem eine Tauchbewegung des Aufbaus im Bereich eines oder mehrerer Räder das Niveau des Aufbaus durch Beaufschlagung des jeweiligen Funktionselementes 9 mit dem Arbeitsdruck des Speicherraums 3 angehoben wird.

Zur Steuerung der Vorrichtung 1 ist ein Steuergerät 6 vorgesehen, das einen Eingangs-Signalblock 13 und einen Ausgangs-Signalblock 14 umfaßt, wobei dem Eingangs-Signalblock 13 Eingangs-Signalleitungen 15 bis 19 und dem Ausgangs-Signalblock 14 Ausgangs-Signalleitungen 20 bis 23 zugeordnet sind.

Über die Eingangs-Signalleitungen 15, 16 werden dem Steuergerät 6 Zustandsgrößen der Fahrzeugs zugeführt, insbesondere kinematische Größen wie die Fahrzeuggeschwindigkeit oder der Lenkwinkel. Die zwei Eingangs-Signalleitungen 17 übermitteln das von den Niveausensoren 24, die an der Vorderachse den Abstand zwischen den beiden Vorderrädern und dem Aufbau liegen, erzeugte Signal an das Steuergerät 6. Entsprechend übermittelt die Eingangs-Signalleitung 18 das Niveausignal eines Niveausensors 25 an der Hinterachse. Die Eingangs-Signalleitung 19 überträgt als Eingangssignal den Ist-Druck $P_{ist}$, das in einem Drucksensor 5 erzeugt wird, welcher den Druck in der Hauptleitung 10 zwischen dem Kompressor 2 und dem Speicherraum 3 mißt.

Über die Ausgangs-Signalleitung 20 wird der den Kompressor 2 antreibende Motor M gesteuert. Die Ausgangs-Signalleitung 21 beaufschlagt ein Ablaßventil 26 im Kompressor 2. Weiterhin sind vier Ausgangs-Signalleitungen 22 vorgesehen, die jeweils ein Ventil 7 im Ventilblock 4 steuern; jedes Ventil 7 liegt in einer Druckleitung 8, die zu jeweils einem Funktionselement 9 führt. Schließlich liefert das Steuergerät 6 über die Ausgangs-Signalleitung 23 ein Ausgangssignal zur Steuerung eines Zentralspeicherventils 11, das ebenfalls im Ventilblock 4 angeordnet ist und mit dem die Hauptleitung 10 zwischen Kompressor 2 und Speicherraum 3 absperrbar ist.

Nachfolgend wird die Funktionsweise der Vorrichtung und das Zusammenspiel der einzelnen Komponenten beschrieben.

Das Steuergerät 6 nimmt über die Eingangs-Signalleitungen 15 bis 19 die Zustandsgrößen des Systems auf. Wenn die Niveausensoren 24, 25 eine Tauchbewegung registrieren, werden die entsprechenden pneumatischen Funktionselemente mit Druck aus dem Speicherraum 3 und/oder dem Kompressor 2 beaufschlagt. Hierfür werden die Ventile 7 im Ventilblock 4 in Öffnungsstellung geschaltet, so daß der Arbeitsdruck im Speicherraum 3 auf die Funktionselemente 9 übertragen wird. Gegebenenfalls ist es zweckmäßig das Zentralspeicherventil 11 zu schließen, woraufhin der Speicherraum 3 abgetrennt und ausschließlich Druck aus dem Kompressor auf die Funktionselemente übertragen wird.

Wenn der im Drucksensor 5 gemessene Druck im Speicherraum 3 unter eine vorgegebene Grenze fällt, wird der Speicherraum 3 wieder aufgeladen. Alternativ kann der Speicherladevorgang auch in regelmäßigen Zeitabständen ausgelöst werden, unabhängig von der Höhe des aktuellen Druckes im Speicherraum 3. Während des Speicherladevorgangs befindet sich das Zentralspeicherventil 11 in Öffnungsstellung; die Ventile 7 sind dagegen in Schließstellung geschaltet, um die Funktionselemente 9 vom Speicherladevorgang abzukoppeln.

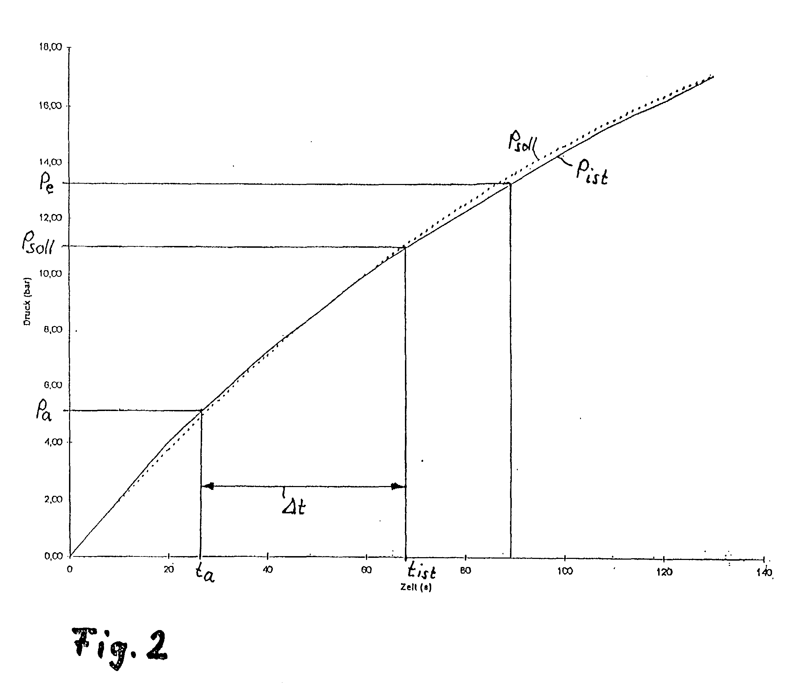

Der Speicherladevorgang beginnt bei einem in Fig. 2 dargestellten, ein Minimum markierenden Anfangswert $P_a$, indem der Kompressor 2 durch ein Startsignal über die Ausgangs-Signalleitung 20 in Betrieb genommen wird; zugleich wird das dem Kompressor zugeordnete Ablaßventil 26 geschlossen. Der Speicherladevorgang wird solange fortgesetzt, bis der Druck im Speicherraum 3 den vorgegebenen Arbeitsdruck, den Endwert $P_e$, erreicht hat.

Um Informationen über den Kompressorzustand einschließlich der dazugehörenden Aggregate zu erhalten, ist vorgesehen, daß während des Speicherladevorganges der Druck im Speicherraum gemessen und mit einer vorgegebenen Sollkurve des Soll-Drucks $P_{soll}$ verglichen wird, wobei Abweichungen, die ein zulässiges Maß überschreiten, zu einem Fehlersignal führen. Aus dem Vorzeichen der Abweichung können dabei Rückschlüsse auf die Art des aufgetretenen Fehlers gezogen werden.

Liegt die Abweichung oberhalb eines zulässigen Toleranzwertes $P_{tol}$, so ist der tatsächliche, gemessene Ist-Druck $P_{ist}$ im Speicherraum größer als die Summe aus dem Soll-Druck $P_{soll}$ und dem Toleranzwert $P_{tol}$, was bedeutet, daß der Ist-Druck $P_{ist}$ unzulässig hoch ist. Diese Abweichung deutet darauf hin, daß das Zentralspeicherventil 11 nicht öffnet, daß der Leitungsabschnitt der Hauptleitung 10 zwischen dem Kompressor 2 und dem Ventilblock 4 verstopft ist oder der Leitungsabschnitt der Hauptleitung 10 zwischen dem Ventilblock 4 und dem Speicherraum 3 verstopft ist.

Liegt die Abweichung unterhalb des zulässigen Toleranzwertes $P_{tol}$, so ist der tatsächliche, gemessene Ist-Druck $P_{ist}$ im Speicherraum kleiner als die Differenz von Soll-Druck $P_{soll}$ und dem Toleranzwert $P_{tol}$; dies bedeutet, daß der Ist-Druck $P_{ist}$ unzulässig klein ist und der erforderliche Arbeitsdruck nicht erreicht werden kann. Als Fehlermöglichkeiten kommen ein defekter Kompressor 2, ein undichter Speicherraum 3 oder eine undichte Hauptleitung 10 im Leitungsabschnitt zwischen dem Kompressor 2 und dem Ventilblock 4 bzw. zwischen dem Ventilblock 4 und dem Speicherraum 3 in Betracht.

Die Bestimmung des Sollkurve für den Druckanstieg erfolgt anhand eines Referenzkompressors mit dazugehörendem Speicherraum. Der Druckanstieg im Speicherraum kann in Abhängigkeit der Zeit näherungsweise durch ein Polynom zweiten Grades der Form

$$P_{soll}(t) = a_2 * t^2 + a_1 * t + a_0$$

beschrieben werden, wobei die Polynomkoeffizienten $a_0$, $a_1$, $a_2$ bestimmt werden, indem zu drei verschiedenen Zeitpunkten $t_1$, $t_2$, $t_3$ der Druck $P_1$, $P_2$, $P_3$ im Speicherraum des Referenzkompressors gemessen wird und die Koeffizienten des Polynoms gemäß den Beziehungen

$$a_2 = \frac{(P_1 - P_3) * (t_2 - t_3) - (P_2 - P_3) * (t_1 - t_3)}{(t_1 - t_3) * (t_2 - t_3) * (t_1 - t_2)}$$

bzw.

$$a_2 = \frac{P_1}{(t_1 - t_3) * (t_1 - t_2)} - \frac{P_2}{(t_2 - t_3) * (t_1 - t_2)} - \frac{P_3}{(t_1 - t_3) * (t_2 - t_3)} \, ,$$

$$a_1 = (P_1 - P_3)/(t_1 - t_3) - a_2 * (t_1 + t_3) \, ,$$

$$a_0 = P_1 - a_2 * t_1^2 - a_1 * t_1$$

berechnet werden. Die berechneten Polynomkoeffizienten werden in einem Speicher des Steuergeräts 6 abgelegt und zur Berechnung des Soll-Druckanstiegs beim Speicherladevorgang herangezogen.

Aus Fig. 2 geht ein Vergleich zwischen berechnetem Druckverlauf $P_{soll}$ und gemessenem Druckverlauf $P_{ist}$ eines Referenzkompressors hervor; die Abweichung zwischen Soll- und Ist-Druck liegt maximal im einstelligen Prozentbereich.

Da der zu Beginn des Speicherladevorgangs herrschende Anfangsdruck $P_a$ nicht für jeden Speicherladevorgang gleich ist, muß aufgrund der Nichtlinearität des Druckanstiegs der jeweils betreffende Abschnitt der Sollkurve herangezogen werden, damit ein Soll/Ist-Vergleich möglich ist. Hierfür wird das Polynom zweiten Grades des Soll-Drucks so umgeformt, daß der Soll-Druck $P_{soll}$ ausgehend vom jeweiligen, zu Beginn eines Speicherladevorganges

gemessenen Anfangsdruck $P_a$ durch Addition eines Soll-Differenzdrucks $\Delta P_{soll}$ berechnet werden kann. Der Soll-Differenzdrucks $\Delta P_{soll}$ hängt dabei von den Polynomkoeffizienten $a_0$, $a_1$, $a_2$, dem gemessenen Anfangsdruck $P_a$ und dem zwischen dem Zeitpunkt $t_a$ zu Beginn des Speicherladevorgangs und dem aktuellen Zeitpunkt $t_{ist}$ verstrichenen Zeitraum $\Delta t$ ab (vergleiche Fig. 2):

$$\Delta t = t_{ist} - t_a \, ,$$

$$\Delta P_{soll} = \Delta t * \{a_2 * \Delta t + [a_1^2 - 4 * a_2 * (a_0 - P_a)]^{\frac{1}{2}} \} \, .$$

Aus diesen Informationen kann durch Superposition von Anfangsdruck $P_a$ und gewichteter Soll-Differenzdrucks $\Delta P_{soll}$ der Soll-Druck $P_{soll}$ bestimmt werden, wobei durch die Gewichtung des Soll-Differenzdrucks $\Delta P_{soll}$ der Umgebungsdruck $P_{umg}$ berücksichtigt wird:

$$P_{soll} = P_a + (m * P_{umg} + b) * \Delta P_{soll} \, .$$

Hierin bezeichnen m einen Faktor zur Berücksichtigung des Umgebungsdrucks und b eine Konstante zur Berücksichtigung des Umgebungsdrucks. Der Soll-Druck $P_{soll}$ kann nach der Messung des Anfangsdrucks $P_a$ und der Bestimmung des Umgebungsdrucks für jede Stützstelle $t_{ist} = t_a + \Delta t$ berechnet werden.

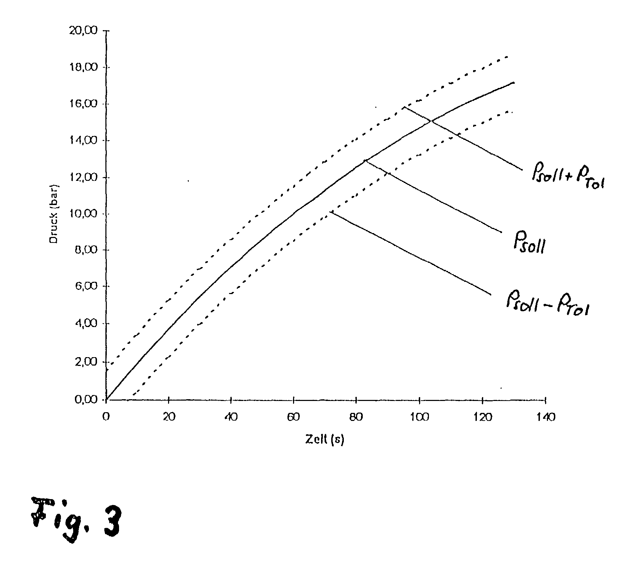

Der aktuelle, gemessene Ist-Druck $P_{ist}$ wird im Steuergerät 6 mit dem Soll-Druck $P_{soll}$ verglichen, wobei um die Sollkurve gemäß Fig. 3 ein Toleranzband gelegt wird, indem zum Soll-Druck $P_{soll}$ der Toleranzwert $P_{tol}$ addiert bzw. subtrahiert wird. Der Ist-Druck $P_{ist}$ darf nicht außerhalb des Toleranzbandes liegen, andernfalls wird am Steuergerät 6 ein Fehlersignal erzeugt und gegebenenfalls der Speicherladevorgang abgebrochen.

Bezugszeichenliste

| | |
|---|---|
| 1 | Vorrichtung |
| 2 | Kompressor |
| 3 | Speicherraum |
| 4 | Ventilblock |
| 5 | Drucksensor |
| 6 | Steuergerät |
| 7 | Ventil |
| 8 | Druckleitung |
| 9 | Funktionselement |
| 10 | Hauptleitung |
| 11 | Zentralspeicherventil |
| 12 | Rad |
| 13 | Eingangs-Signalblock |
| 14 | Ausgangs-Signalblock |
| 15 - 19 | Eingangs-Signalleitung |
| 20 - 23 | Ausgangs-Signalleitung |
| 24, 25 | Niveausensor |
| 26 | Ablaßventil |

**Patentansprüche**

1.  Verfahren zur Überwachung der Funktion eines Kompressors, insbesondere eines Kompressors zur pneumatischen Niveauregulierung des Aufbaus eines Kraftfahrzeugs, der einen gasgefüllten Speicherraum (3) mit einem Arbeitsdruck beaufschlagt, wobei der Ist-Druck ($P_{ist}$) im Speicherraum (3) gemessen, mit einem Soll-Druck ($P_{soll}$) verglichen und bei einer Abweichung des Ist-Drucks ($P_{ist}$) vom Soll-Druck ($P_{soll}$) ein Fehlersignal erzeugt wird, **dadurch gekennzeichnet,** **daß** der Vergleich von Ist-Druck ($P_{ist}$) und Soll-Druck ($P_{soll}$) nur während des Speicherladevorgangs beim Aufladen des Speicherraums (3) erfolgt, wobei der Verlauf des Soll-Drucks ($P_{soll}$) als Polynom zweiten Grades in Abhängigkeit der Zeit (t) gemäß der Beziehung

$$P_{soll}(t) = a_2 * t^2 + a_1 * t + a_0$$

darstellbar ist und die Koeffizienten ($a_0$, $a_1$, $a_2$) des Polynoms vorab anhand eines Referenzkompressors mit dazugehörendem Speicherraum bestimmt werden.

2.  Verfahren nach Anspruch 1,
    **dadurch gekennzeichnet,**
    **daß** die Koeffizienten ($a_0$, $a_1$, $a_2$) während des Speicherladevorgangs des Speicherraums des Referenzkompressors bestimmt werden.

3.  Verfahren nach Anspruch 1 oder 2,
    **dadurch gekennzeichnet,**
    **daß** zu drei verschiedenen Zeitpunkten ($t_1$, $t_2$, $t_3$) der Druck ($P_1$, $P_2$, $P_3$) im Speicherraum des Referenzkompressors gemessen wird und die Koeffizienten des Polynoms ($P_{soll}$) gemäß den Beziehungen

$$a_2 = \frac{(P_1 - P_3) * (t_2 - t_3) - (P_2 - P_3) * (t_1 - t_3)}{(t_1 - t_3) * (t_2 - t_3) * (t_1 - t_2)}$$

bzw.

$$a_2 = \frac{P_1}{(t_1 - t_3) * (t_1 - t_2)} - \frac{P_2}{(t_2 - t_3) * (t_1 - t_2)} - \frac{P_3}{(t_1 - t_3) * (t_2 - t_3)},$$

$$a_1 = (P_1 - P_3) / (t_1 - t_3) - a_2 * (t_1 + t_3),$$

$$a_0 = P_1 - a_2 * t_1^2 - a_1 * t_1$$

bestimmt werden.

4.  Verfahren nach einem der Ansprüche 1 bis 3,
    **dadurch gekennzeichnet, daß** vor dem Speicherladevorgang der Anfangsdruck ($P_a$) gemessen wird.

5.  Verfahren nach Anspruch 4,
    **dadurch gekennzeichnet,**
    **daß** der Soll-Druck ($P_{soll}$) aus dem gemessenen Anfangsdruck ($P_a$) und dem berechneten Soll-Differenzdruck ($\Delta P_{soll}$) unter Berücksichtigung des Umgebungsdrucks ($P_{Umg}$) gemäß der Beziehung

$$P_{soll} = P_a + (m * P_{umg} + b) * \Delta P_{soll}$$

mit

m     Faktor zur Berücksichtigung des Umgebungsdrucks
b     Konstante zur Berücksichtigung des Umgebungsdrucks

bestimmt wird.

6.  Verfahren nach Anspruch 5,
    **dadurch gekennzeichnet,**
    **daß** der Soll-Differenzdruck ($\Delta P_{soll}$) in Abhängigkeit des gemessenen Anfangsdrucks ($P_a$) und der Zeitdifferenz

($\Delta t$) zwischen dem Zeitpunkt ($t_a$) der Messung des Anfangsdrucks ($P_a$) und dem aktuellen Zeitpunkt ($t_{ist}$) der Messung des aktuellen Ist-Drucks ($P_{ist}$) gemäß den Beziehungen

$$\Delta t = t_{ist} - t_a \, ,$$

$$\Delta P_{soll} = \Delta t * \{a_2 * \Delta t + [a_1^2 - 4*a_2*(a_0 - P_a)]^{1/2}\}$$

bestimmt wird.

7. Verfahren nach einem der Ansprüche 1 bis 6,
**dadurch gekennzeichnet,**
**daß** als Toleranzwert ($P_{Tol}$) eine vorgebbare, maximal tolerierbare Druck-Abweichung bestimmt wird, die zum vorgegebenen Soll-Druck ($P_{soll}$) addiert bzw. von diesem subtrahiert wird, wobei ein Fehlersignal erzeugt wird, wenn die Abweichung des Ist-Drucks ($P_{ist}$) vom Soll-Druck ($P_{soll}$) den Toleranzwert ($P_{Tol}$) übersteigt.

8. Vorrichtung zur Durchführung des Verfahrens nach einem der Ansprüche 1 bis 7, mit einem Drucksensor (5) zur Messung des Ist-Drucks ($P_{ist}$) eines gasgefüllten Speicherraums (3), welcher über den Kompressor (2) aufladbar ist, und mit einem Steuergerät (6), dem der Ist-Druck ($P_{ist}$) in Form eines Eingangssignals zuführbar ist, das im Steuergerät (6) mit einem einem Soll-Druck ($P_{soll}$) entsprechenden Sollsignal vergleichbar ist, wobei bei einer einen vorgegebenen Toleranzwert ($P_{Tol}$) übersteigenden Abweichung ein Fehlersignal erzeugbar ist,
**dadurch gekennzeichnet**
**daß** dem Kompressor (2) nur beim Aufladen des Speicherraums (3) ein vom Steuergerat (6) erzeugtes Steuerungssignal zeitgleich mit der Messung des Ist-Drucks ($P_{ist}$) und dem Soll-Ist-Vergleich zuführbar ist, wobei in dem Steuergerät (6) das dem Soll-Druck ($P_{soll}$) entsprechende Sollsignal als Polynom zweiten Grades mit drei Koeffizienten ($a_0$, $a_1$, $a_2$) abgelegt ist.

9. Vorrichtung nach Anspruch 8,
**dadurch gekennzeichnet,**
**daß** dem Speicherraum (3) ein Ventilblock (4) zugeordnet ist, der mehrere Ventile (7) in Druckleitungen (8) umfaßt, welche den Speicherraum (3) mit pneumatischen Funktionselementen (9) verbinden.

10. Vorrichtung nach Anspruch 8 oder 9,
**dadurch gekennzeichnet,**
**daß** vom Speicherraum (3) eine Hauptleitung (10) abzweigt, über die der Kompressor (2) mit dem Speicherraum (3) verbunden ist und an die die Druckleitungen (8) angeschlossen sind.

11. Vorrichtung nach Anspruch 10,
**dadurch gekennzeichnet,**
**daß** in der Hauptleitung (10) innerhalb des Ventilblocks (4) ein Zentralspeicherventil (11) angeordnet ist.

12. Vorrichtung nach Anspruch 10 oder 11,
**dadurch gekennzeichnet,**
**daß** der Drucksensor (5) mit dem Druck der Hauptleitung (10) beaufschlagt ist.

13. Vorrichtung nach einem der Ansprüche 8 bis 12,
**dadurch gekennzeichnet,**
**daß** das Sollsignal in Abhängigkeit der drei Koeffizienten ($a_0$, $a_1$, $a_2$), dem Anfangsdruck ($P_a$) im Speicherraum (3) und der Zeitdifferenz ($\Delta t$) bestimmbar ist.

**Claims**

1. Method for monitoring the function of a compressor, in particular of a compressor for the pneumatic level control of a motor vehicle body, which applies a working pressure to a gas-filled accumulator chamber (3), whereby the actual pressure ($P_{ist}$) in the accumulator chamber (3) is measured and compared with a set pressure ($P_{soll}$) and a fault signal is generated if the actual pressure ($P_{ist}$) deviates from the set pressure ($P_{soll}$),

**characterised in that**
the actual pressure ($P_{ist}$) is compared to the set pressure ($P_{soll}$) only during the accumulator charging process while the accumulator chamber (3) is charged, whereby the curve of the set pressure ($P_{soll}$) can be represented as a second-degree polynomial dependent on time (t) according to the relation

$$P_{soll}(t) = a_2 * t^2 + a_1 * t + a_0$$

and the coefficients ($a_0$, $a_1$, $a_2$) of the polynomial are determined in advance by means of a reference compressor with an associated accumulator chamber.

2. Method according to claim 1,
   **characterised in that**
   and the coefficients ($a_0$, $a_1$, $a_2$) are determined during the accumulator charging process of the accumulator chamber of the reference compressor.

3. Method according to claim 1 or 2,
   **characterised in that**
   the pressure ($P_1$, $P_2$, $P_3$) in the accumulator chamber of the reference compressor is measured at three different times ($t_1$, $t_2$, $t_3$) and **in that** the coefficients of the polynomial ($P_{soll}$) are determined according to the relations

$$a_2 = \frac{(P_1 - P_3) * (t_2 - t_3) - (P_2 - P_3) * (t_1 - t_3)}{(t_1 - t_3) * (t_2 - t_3) * (t_1 - t_2)}$$

or

$$a_2 = \frac{P_1}{(t_1 - t_3) * (t_1 - t_2)} - \frac{P_2}{(t_2 - t_3) * (t_1 - t_2)} - \frac{P_3}{(t_1 - t_3) * (t_2 - t_3)},$$

$$a_1 = (P_1 - P_3) / (t_1 - t_3) - a_2 * (t_1 + t_3),$$

$$a_0 = P_1 - a_2 * t_1^2 - a_1 * t_1.$$

4. Method according to any of claims 1 to 3,
   **characterised in that**
   the initial pressure ($P_a$) is measured before the accumulator charging process.

5. Method according to claim 4,
   **characterised in that**
   the set pressure ($P_{soll}$) is determined from the measured initial pressure ($P_a$) and the calculated set pressure differential ($\Delta P_{soll}$), taking into consideration the ambient pressure ($P_{Umg}$), according to the relation

$$P_{soll} = P_a + (m * P_{Umg} + b) * \Delta P_{soll}$$

whereby

m     factor for inclusion of ambient pressure
b     constant for inclusion of ambient pressure.

6. Method according to claim 5,
   **characterised in that**
   the set pressure differential ($\Delta P_{soll}$) is determined in dependence on the measured initial pressure ($P_a$) and the time difference ($\Delta t$) between the time ($t_a$) of measuring the initial pressure ($P_a$) and the actual time ($t_{ist}$) of measuring

the actual pressure ($P_{ist}$) according to the relations

$$\Delta t = t_{ist} - t_a,$$

$$\Delta P_{soll} = \Delta t * \{a_2 * \Delta t + [a_1^2 - 4 * a_2 * (a_0 - P_a)]^{1/2}\}.$$

**7.** Method according to any of claims 1 to 6,
**characterised in that**
a presettable, maximum permissible pressure difference is determined as a tolerance value ($P_{Tol}$) for addition to or subtraction from the predetermined set pressure ($P_{soll}$), whereby a fault signal is generated if the difference between the actual pressure ($P_{ist}$) and the set pressure ($P_{soll}$) exceeds the tolerance value ($P_{Tol}$).

**8.** Device for the execution of the method according to any of claims 1 to 7, with a pressure sensor (5) for measuring the actual pressure ($P_{ist}$) of a gas-filled accumulator chamber (3) chargeable by the compressor (2), and with a control unit (6) to which the actual pressure ($P_{ist}$) can be fed as an input signal which can be compared to a reference signal corresponding to the set pressure ($P_{soll}$) in the control unit (6), whereby a fault signal can be generated if a preset tolerance value ($P_{Tol}$) is exceeded,
**characterised in that**
the compressor (2) can be supplied only during the charging of the accumulator chamber (3) with a control signal simultaneously with the measurement of the actual pressure ($P_{ist}$) and the comparison between set and actual pressure, whereby the reference signal corresponding to the set pressure ($P_{soll}$) is stored in the control unit (6) as a second-degree polynomial with three coefficients ($a_0$, $a_1$, $a_2$).

**9.** Device according to claim 8
**characterised in that**
a valve block (4) comprising a plurality of valves (7) in pressure lines (8) connecting the accumulator chamber (3) to pneumatic operating elements (9) is assigned to the accumulator chamber (3).

**10.** Device according to claim 8 or 9,
**characterised in that**
a main line (10) which connects the compressor (2) to the accumulator chamber (3) and to which the pressure lines (8) are connected branches off from the accumulator chamber 3.

**11.** Device according to claim 10,
**characterised in that**
a central memory valve (11) is located in the main line (10) within the valve block (4).

**12.** Device according to claim 10 or 11,
**characterised in that**
the pressure of the main line (10) is applied to the pressure sensor (5).

**13.** Device according to any of claims 8 to 12,
**characterised in that**
the reference signal can be determined in dependence on the three coefficients ($a_0$, $a_1$, $a_2$), the initial pressure ($P_a$) in the accumulator chamber (3) and the time difference ($\Delta t$).

**Revendications**

**1.** Procédé de surveillance du fonctionnement d'un compresseur, en particulier d'un compresseur pour la correction pneumatique de l'assiette de la caisse d'un véhicule automobile, qui alimente en pression de travail une chambre d'accumulation (3) remplie de gaz,
dans lequel on mesure la pression réelle ($P_{réelle}$) dans la chambre d'accumulation (3), on la compare avec une pression de consigne ($P_{consigne}$) et en cas d'écart de la pression réelle ($P_{réelle}$) par rapport à la pression de consigne ($P_{consigne}$), on génère un signal d'erreur,
**caractérisé en ce que**

la comparaison de la pression réelle ($P_{réelle}$) et de la pression de consigne ($P_{consigne}$) s'effectue uniquement pendant l'opération de chargement lors du chargement de la chambre d'accumulation (3), l'évolution de la pression de consigne ($P_{consigne}$) étant représentable comme polynôme du second degré en fonction du temps (t), selon l'équation

$$P_{consigne}(t) = a_2 * t^2 + a_1 * t + a_0$$

et les coefficients ($a_0$, $a_1$, $a_2$) du polynôme sont déterminés auparavant en se basant sur un compresseur de référence avec une chambre d'accumulation associée.

2. Procédé selon la revendication 1, **caractérisé en ce que** les coefficients ($a_0$, $a_1$, $a_2$) sont déterminés pendant l'opération de chargement de la chambre d'accumulation du compresseur de référence.

3. Procédé selon l'une ou l'autre des revendications 1 et 2, **caractérisé en ce que** l'on mesure la pression ($P_1$, $P_2$, $P_3$) dans la chambre d'accumulation du compresseur de référence à trois instants différents ($t_1$, $t_2$, $t_3$), et les coefficients du polynôme ($P_{consigne}$) sont déterminés selon les équations

$$a_2 = \frac{(P_1 - P_3) * (t_2 - t_3) - (P_2 - P_3) * (t_1 - t_3)}{(t_1 - t_3) * (t_2 - t_3) * (t_1 - t_2)}$$

ou

$$a_2 = \frac{P_1}{(t_1 - t_3) * (t_1 - t_2)} - \frac{P_2}{(t_2 - t_3) * (t_1 - t_2)} - \frac{P_3}{(t_1 - t_3) * (t_2 - t_3)}$$

$$a_1 = (P_1 - P_3) / (t_1 - t_3) - a_2 * (t_1 + t_3)$$

$$a_0 = P_1 - a_2 * t_1^2 - a_1 * t_1$$

4. Procédé selon l'une des revendications 1 à 3, **caractérisé en ce qu'**avant l'opération de chargement on mesure la pression initiale ($P_a$).

5. Procédé selon la revendication 4, **caractérisé en ce que** l'on détermine la pression de consigne ($P_{consigne}$) à partir de la pression initiale mesurée ($P_a$) et de la pression différentielle de consigne calculée ($\Delta P_{consigne}$), en prenant en compte la pression ambiante ($P_{amb}$) selon l'équation

$$P_{consigne} = P_a + (m * P_{amb} + b) * \Delta P_{consigne}$$

dans laquelle

m est un facteur pour prendre en compte la pression ambiante,
b est une constante pour prendre en compte la pression ambiante.

6. Procédé selon la revendication 5, **caractérisé en ce que** l'on détermine la pression différentielle de consigne ($\Delta P_{consigne}$) en fonction de la pression initiale mesurée ($P_a$) et de la différence temporelle ($\Delta t$) entre l'instant ($t_a$) de la mesure de la pression initiale ($P_a$) et l'instant actuel ($t_{réel}$) de la pression réelle actuelle ($P_{réelle}$) selon les équations

$$\Delta t = t_{réel} - t_a$$

$$\Delta P_{consigne} = \Delta t * \{a_2 * \Delta t + [a_1^2 - 4 * a_2 * (a_0 - P_a]^{1/2}\}$$

**7.** Procédé selon l'une des revendications 1 à 6, **caractérisé en ce que** l'on détermine comme valeur de tolérance ($P_{tol}$) un écart de pression maximal tolérable prédéterminé que l'on additionne à ou que l'on soustrait de la pression de consigne prédéterminée ($P_{consigne}$), un signal d'erreur étant émis si l'écart de la pression réelle ($P_{réelle}$) par rapport à la pression de consigne ($P_{consigne}$) dépasse la valeur de tolérance ($P_{tol}$).

**8.** Système pour mettre en oeuvre le procédé selon l'une des revendications 1 à 7, comportant un détecteur de pression (5) pour mesurer la pression réelle ($P_{réelle}$) d'une chambre d'accumulation (3) remplie de gaz et susceptible d'être chargée via le compresseur (2), et comportant un appareil de commande (6) auquel peut être envoyée la pression réelle ($P_{réelle}$) sous la forme d'un signal d'entrée qui, dans l'appareil de commande (6), est comparable avec un signal de consigne correspondant à une pression de consigne ($P_{consigne}$), un signal d'erreur pouvant être généré en cas d'écart dépassant une valeur de tolérance prédéterminée ($P_{tol}$), **caractérisé en ce qu'**uniquement pendant le chargement de la chambre d'accumulation (3) un signal de commande susceptible d'être généré par l'appareil de commande (6) peut être envoyé au compresseur simultanément avec la mesure de la pression réelle ($P_{réelle}$) et avec la comparaison entre la valeur de consigne et la valeur réelle, le signal de consigne correspondant à la pression de consigne ($P_{consigne}$) étant déposé dans l'appareil de commande (6) sous forme de polynôme du second degré avec trois coefficients ($a_0$, $a_1$, $a_2$).

**9.** Système selon la revendication 8, **caractérisé en ce qu'**un bloc formant valve (4) est associé à la chambre d'accumulation (3), qui comprend plusieurs valves (7) dans des conduites sous pression (8) qui relient la chambre d'accumulation (3) aux éléments fonctionnels pneumatiques (9).

**10.** Système selon l'une ou l'autre des revendications 8 et 9, **caractérisé en ce qu'**une conduite principale (10) se ramifie de la chambre d'accumulation (3), via laquelle le compresseur (2) est relié à la chambre d'accumulation et à laquelle sont branchées les conduites sous pression (8).

**11.** Système selon la revendication 10, **caractérisé en ce qu'**une valve d'accumulation centrale (11) est agencée dans la conduite principale (10) à l'intérieur du bloc formant valve (4).

**12.** Système selon l'une ou l'autre des revendications 10 et 11, **caractérisé en ce que** le détecteur de pression (5) est sollicité par la pression de la conduite principale (10).

**13.** Système selon l'une des revendications 8 à 12, **caractérisé en ce que** le signal de consigne peut être déterminé en fonction des trois coefficients ($a_0$, $a_1$, $a_2$), de la pression initiale ($P_a$) dans la chambre d'accumulation (3) et de la différence temporelle ($\Delta t$).

Fig. 1

EP 0 931 680 B1

Fig. 2

Fig. 3